(19) Europäisches Patentamt
European Patent Office
Office européen des brevets

(11) EP 3 879 251 B1

(12) **EUROPÄISCHE PATENTSCHRIFT**

(45) Veröffentlichungstag und Bekanntmachung des Hinweises auf die Patenterteilung:
**06.08.2025 Patentblatt 2025/32**

(21) Anmeldenummer: **21160832.8**

(22) Anmeldetag: **04.03.2021**

(51) Internationale Patentklassifikation (IPC):
***G01K 17/10** (2006.01)* ***G01F 1/66** (2022.01)*

(52) Gemeinsame Patentklassifikation (CPC):
**G01F 1/66; G01K 17/10**

(54) **VERFAHREN ZUM BETRIEB EINER ENERGIEZÄHLEREINRICHTUNG UND ENERGIEZÄHLEREINRICHTUNG**

ENERGY METER AND METHOD FOR OPERATING SAME

PROCÉDÉ DE FONCTIONNEMENT D'UN COMPTEUR D'ÉNERGIE ET COMPTEUR D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2020 DE 102020001597**

(43) Veröffentlichungstag der Anmeldung:
**15.09.2021 Patentblatt 2021/37**

(73) Patentinhaber: **Diehl Metering GmbH
91522 Ansbach (DE)**

(72) Erfinder:
- **Benkert, Andreas
91522 Ansbach (DE)**
- **Horn, Roland
91629 Weihenzell (DE)**
- **Mayle, Michael
91522 Ansbach (DE)**
- **Sonnenberg, Hans-Michael
91564 Neuendettelsau (DE)**
- **Sosna, Christoph
90429 Nürnberg (DE)**

(74) Vertreter: **Diehl Patentabteilung
c/o Diehl Stiftung & Co. KG
Stephanstraße 49
90478 Nürnberg (DE)**

(56) Entgegenhaltungen:
**US-A1- 2013 259 083**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 879 251 B1

## Beschreibung

Die Erfindung betrifft ein Verfahren zum Betrieb einer Energiezählereinrichtung zur Ermittlung des Energieverbrauchs in einem Temperierungskreislauf, in dem ein Gemisch aus wenigstens zwei Fluiden, insbesondere ein Wasser-Glykol-Gemisch, zirkuliert, wobei die Energiezählereinrichtung eine Ultraschallmesseinrichtung zur Ermittlung des Gemischdurchflusses durch eine Laufzeitmessung, eine Temperaturmesseinrichtung zur Ermittlung einer Temperaturdifferenz zwischen dem Vorlauf und dem Rücklauf des Gemischs und eine Recheneinrichtung zur Ermittlung des Energieverbrauchs unter Berücksichtigung des Durchflusses, der Temperaturdifferenz sowie eines k-Faktors des Gemischs, aufweist. Daneben betrifft die Erfindung eine Energiezählereinrichtung.

Energiezählereinrichtungen, beispielsweise Wärmezähler oder Kältezähler, messen den Energieverbrauch W, beispielsweise basierend auf einer volumetrischen Flussmessung in Verbindung mit dem Temperaturabfall des Trägerfluids zwischen dem Vorlauf und dem Rücklauf ($T_{in}$-$T_{out}$). Zur Berechnung des Energieverbrauchs W wird dabei von der grundsätzlichen Gleichung

$$W = \int_{\Delta t} \rho \cdot c_p (T_{in} - T_{out}) \dot{V} \, dt \qquad (1)$$

ausgegangen. Darin bezeichnet $\rho$ die Dichte des Trägerfluids, $c_p$ die spezifische Wärmekapazität bei konstantem Druck des Trägerfluids, wobei das Produkt $\rho \cdot cp$ üblicherweise als der k-Faktor bezeichnet wird, und $\dot{V}$ beschreibt den volumetrischen Fluss des Trägerfluids. Als Trägerfluid ist es im Stand der Technik gängig, Gemische verschiedener Fluide, insbesondere verschiedener Flüssigkeiten, einzusetzen. Ein typisches Beispiel sind Wasser-Glykol-Mischungen, das bedeutet, Gemische aus Wasser und einem Glykol als weiterer Flüssigkeit. Dabei sind Zwei-Komponenten-Gemische am gängigsten. Wasser-Glykol-Mischungen sind kommerziell erhältlich, und zwar zum einen als benutzungsbereite Gemische, zum anderen als Glykolkonzentrate, die mit Wasser verdünnt werden müssen, um ein gewolltes Mischungsverhältnis zu erzielen.

Im Einsatz besteht dabei das Problem, dass das Mischungsverhältnis im Trägerfluid über die Zeit veränderlich sein kann. Gründe hierfür sind das Altern des Gemisches, ein Verlust von Trägerfluid, üblicherweise Wasser, durch Verdampfung für die Druckkompensation oder ein folgendes Wiederauffüllen verlorener Trägerflüssigkeit mit Wasser und/oder Glykol. Hierdurch werden die thermischen Eigenschaften des Trägerfluids verändert, woraus wiederum ein unmittelbarer Einfluss auf den gemessenen Energieverbrauch folgt. Auch andere Einflüsse auf die thermischen Eigenschaften des Trägerfluids sind bei verschiedenen Prozeduren denkbar, denen die Energiezählereinrichtung ausgesetzt wird.

Um gewisse Zertifizierungen für Energiezählereinrichtungen zu erhalten, müssten derartige Veränderungen im Trägerfluid grundsätzlich kompensierbar sein bzw. zumindest berücksichtigt werden. Ein Ansatz könnte sein, jährlich die Glykolkonzentration zu überprüfen und entsprechend anzupassen, wenn die gemessene Konzentration um mehr als ein Prozent von der vorgegebenen Konzentration abweicht. Weiterhin kann vorgeschrieben werden, das Trägerfluid im Fall eines Druckabfalls im Temperierungskreislauf lediglich mit dem vorgegebenen Gemisch in dem vorgegebenen Mischungsverhältnis zu ergänzen.

Die Dichte $\rho$ und die spezifische Wärmekapazität $c_p$ weisen beide zudem eine Temperaturabhängigkeit auf, so dass auch der k-Faktor eine Temperaturabhängigkeit aufweist, die in Betracht gezogen werden muss. Allerdings ist die Temperatur des Trägerfluids bekannt, da die Temperaturdifferenz ohnehin vermessen werden muss, was üblicherweise durch eine Temperaturmessung im Vorlauf und im Rücklauf geschieht.

Zur Bestimmung des aktuellen k-Faktors des Trägerfluids wurde im Stand der Technik bereits vorgeschlagen, Messungen durchzuführen, beispielsweise kalorimetrische Messungen. Unter Verwendung des Zusammenhangs $k = W/(V\,\Delta T)$ kann aus dem Temperaturanstieg $\Delta T$ eines bekannten Volumens V einer Testflüssigkeit nach Erhitzung mit einer bekannten Energiemenge W unmittelbar ein Wert für k bestimmt werden. Ein derartiges Vorgehen ist beispielsweise in DE 10 2007 015 609 A1 möglich, bei welcher die dortige Messvorrichtung unter Berücksichtigung wenigstens eines von einem ihr zugeordneten, im Temperierungskreislauf angeordneten Sensormittel gegebenen Messparameters zur Bestimmung des k-Faktors des Gemischs und unter Berücksichtigung dieses zur Bestimmung des Energieverbrauchs ausgebildet ist.

Ein kalorimetrischer Ansatz ist in Energiezählereinrichtungen jedoch schwer umzusetzen, da der Einfluss der Umgebung und der Wärmeverlust an die Umgebung nicht vernachlässigt werden kann, diese beiden Einflüsse jedoch schwer zu definieren sind. Zudem würde der Einbau einer kalorimetrischen Messung in eine Energiezählereinrichtung, wie beispielsweise auch in EP 1 975 582 B1 vorgeschlagen wird, zu zusätzlichen Kosten führen. Neben dem kalorimetrischen Ansatz kann auch der Zusammenhang zwischen dem k-Faktor, der thermischen Leitfähigkeit $\lambda$ und der thermischen Diffusität a, $k = \lambda/a$, herangezogen werden, um den k-Faktor indirekt durch Messung von $\lambda$ und a zu bestimmen. Auch dies würde jedoch zusätzliche Sensorelemente in einer Energiezählereinrichtung und eine komplexe Messmethode erfordern.

EP 2 746 742 A1 betrifft eine Zählereinrichtung für thermische Energie, bei der die Konzentration einer Frostschutzsubstanz, insbesondere Glykol, in der Trägerflüssigkeit gemessen wird, um weitere Eigenschaften der Trägerflüssigkeit zu bestimmen.

WO 2012/065 276 A1 betrifft ein Verfahren zur Bestimmung des Wärmeflusses eines wärmetransportierenden Fluids, welches ein Gemisch aus wenigstens zwei unterschiedlichen Fluiden ist, wobei die Dichte und die spezifische Wärme des wärmetransportierenden Fluids durch Messung der Schallgeschwindigkeit in dem Fluid bestimmt werden. Die Dichte und die spezifische Wärme werden dann genutzt, um den Wärmestrom zu bestimmen. Konkret wird dabei eine Messung der Temperaturdifferenz und der Schallgeschwindigkeit herangezogen, um die Konzentration des Frostschutzfluids, insbesondere Glykols, zu bestimmen.

Als Energiezählereinrichtungen wurden im Stand der Technik auch bereits solche vorgeschlagen, die den volumetrischen Durchfluss mittels einer Ultraschallmesseinrichtung bestimmen. Dabei kann beispielsweise vorgesehen sein, eine Messanordnung mit zwei Ultraschalltransducern zu verwenden, von denen einer stromaufwärts ausgerichtet ist, der andere stromabwärts, und sich die Transducer in einem bekannten Abstand gegenüber liegen. Aus den Laufzeitdifferenzen der Ultraschallsignale entlang der Strecke in beiden Richtungen lässt sich, insbesondere unter Verwendung eines Kennfelds, das durchgeflossene Volumen des Trägerfluids, mithin der Gemischdurchfluss, bestimmen.

Allgemein bei Zählereinrichtungen, mithin auch bei Energiezählereinrichtungen, wird angestrebt, die Elektronik und somit dem Energieverbrauch möglichst unkompliziert zu halten. Daher sind die im Stand der Technik bekannten Vorgehensweisen zur Ermittlung eines aktuellen k-Faktors nachteilhaft, da sie zusätzliche Sensorik oder zumindest eine Vielzahl von zusätzlichen Verarbeitungsschritten benötigen.

Der Erfindung liegt daher die Aufgabe zugrunde, eine Möglichkeit zur einfach umsetzbaren, genauen Bestimmung des Wärmeverbrauchs in einer Energiezählereinrichtung mit ultraschallbasiertem Messprinzip anzugeben.

Zur Lösung dieser Aufgabe ist bei einem Verfahren der eingangs genannten Art erfindungsgemäß vorgesehen, dass durch die Ultraschallmesseinrichtung auch eine Schallgeschwindigkeit des Gemisches ermittelt wird, wobei durch die Recheneinrichtung aus der Schallgeschwindigkeit und der von der Temperaturmesseinrichtung gemessenen Gemischtemperatur am Ort der Ultraschallmesseinrichtung aufgrund einer empirisch ermittelten Ermittlungsvorschrift unmittelbar der k-Faktor ermittelt wird.

Erfindungsgemäß wurde durch Untersuchungen verschiedenster Messreihen und Messergebnisse festgestellt, dass ein zur hinreichend genauen Bestimmung des k-Faktors geeigneter, unmittelbarer Zusammenhang zwischen der Schallgeschwindigkeit, der Temperatur und dem k-Faktor besteht. Wird beispielsweise die Temperaturabhängigkeit des k-Faktors und die Temperaturabhängigkeit der Schallgeschwindigkeit vermessen, können diese Datensätze als miteinander verbunden angenommen werden, so dass dann, wenn die Schallgeschwindigkeit gemessen wird, diese auch bezüglich des k-Faktors interpretiert werden kann.

Mit anderen Worten wird vorgeschlagen, den k-Faktor basierend auf einer Messung der Schallgeschwindigkeit im Trägerfluid zu bestimmen. Die Temperatur des Trägerfluids und seiner Grundkomponenten, der wenigstens zwei Fluide, beispielsweise Wasser und eine vorgegebene Art von Glykol (oder sonstigem Frostschutzmittel), ist dabei bei Energiezählereinrichtungen ohnehin bekannt, da ja die Temperaturdifferenz zwischen Vorlauf und Rücklauf bestimmt werden soll. Die Ultraschallmesseinrichtung kann nun genutzt werden, um die Schallgeschwindigkeit zu bestimmen. Die empirisch, insbesondere durch Auswertung von Messergebnissen und/oder Simulationsergebnissen, ermittelte Ermittlungsvor**schrift setzt** die Temperatur des Gemischs am Ort der Ultraschallmessung und die Schallgeschwindigkeit in unmittelbarem Zusammenhang zu dem k-Faktor, welcher mithin auf einfache Art und Weise direkt ermittelt werden kann.

Im Rahmen der vorliegenden Erfindung ist mithin kein zusätzlicher Sensor für die k-Faktor-Bestimmung notwendig. Die Schallgeschwindigkeit kann aus einem Mittelwert oder einer Summe eines Laufzeitwerts einer Stromabwärts-Messung und eines Laufzeitwerts einer Stromaufwärts-Messung bei zwei in Flussrichtung gegenüberliegenden Ultraschalltransducern und/oder aus einer Messung bei unbewegtem Gemisch ermittelt werden. Insbesondere bietet sich in diesem Zusammenhang eine Messanordnung, wie bereits oben beschrieben, an, bei der in einem das Trägerfluid führenden Gefäß zwei Ultraschalltransducer angeordnet werden, die sich in Strömungsrichtung in einem bekannten Abstand versetzt gegenüberliegen, so dass eine Stromaufwärts-Messung und eine Stromabwärts-Messung möglich sind. Nachdem der Abstand zwischen dem sendenden Ultraschalltransducer und dem empfangenden Ultraschalltransducer bekannt ist, lässt sich die Schallgeschwindigkeit mit einer einfachen Messung der Laufzeit bei nicht bewegtem Gemisch ermitteln, oder aber, falls ein Fluss vorhanden ist, aus der Summe bzw. dem Mittelwert der Laufzeiten der Stromaufwärts- und der Stromabwärts-Messung oder einer Summe der reziproken Laufzeiten der Stromaufwärts- und Stromabwärts-Messungen. Auf diese Weise fallen flussinduzierte Effekte heraus. Sind beispielsweise L konkret der Abstand zwischen sendendem und empfangendem Ultraschalltransducer, $c_f$ die Schallgeschwindigkeit und $t_1$ und $t_2$ die Absolutlaufzeiten aus der Stromaufwärts- und Stromabwärts-Messung, bezeichnet ferner u die Strömungsgeschwindigkeit des Fluids und $\varphi$ den Winkel zwischen der Ausbreitungsrichtung des Ultraschalls und der Strömungsrichtung des Trägerfluids, so gilt

$$t_1 = \frac{L}{c_f - u\cos\varphi} = \frac{L}{c_f}\frac{1}{(1-\frac{u}{c_f}cos\varphi)}$$

und

$$t_2 = \frac{L}{c_f + u\cos\varphi} = \frac{L}{c_f}\frac{1}{(1+\frac{u}{c_f}cos\varphi)}\ .$$

**Eliminiert** man $u\cos\varphi$, erhält man den exakten Zusammenhang zwischen $c_f$ und den gemessenen Laufzeiten $t_1$ und $t_2$:

$$c_f = \frac{L}{2}\left(\frac{1}{t_1} + \frac{1}{t_2}\right). \qquad (2)$$

**Mit der Näherung** $u << c_f$ und der Reihenentwicklung von $1/(1 + x) \approx 1 - x$ (für kleine x) erhält man

$$c_f \approx \frac{L}{2(t_1+t_2)} \qquad (3)$$

Microcontroller, die sowohl die absolute Laufzeit als auch Laufzeitdifferenzen für Zähleranwendungen bestimmen, sind im Stand der Technik bereits bekannt, beispielsweise von Texas Instruments unter der Seriennummer "TI MPS430FR6047".

Ferner ist es im Rahmen der vorliegenden Erfindung vorteilhaft nicht notwendig, das Mischungsverhältnis im Trägerfluid zu bestimmen, wobei ferner die Dichte und die spezifische Wärmekapazität des Trägerfluids unbekannt bleiben können. Dies vereinfacht die Bestimmung des Wärmeflusses deutlich. Zusammenfassend wird eine empirische Korrelation zwischen dem k-Faktor und der Schallgeschwindigkeit in dem Trägerfluid herangezogen, wobei die Schallgeschwindigkeit auf einfache Weise als Nebenprodukt einer ultraschallbasierten Durchflussmessung bestimmt werden kann. Dabei sei angemerkt, dass die vorliegende Erfindung auf verschiedene Arten der Änderung von thermischen Eigenschaften anwendbar ist, nicht beschränkt auf die im Folgenden hauptsächlich diskutierten Gemischeigenschaften.

Dabei hat sich bei Untersuchungen im Rahmen der vorliegenden Erfindung gezeigt, dass besonders genaue Ermittlungsvorschriften für den k-Faktor dann ermittelt werden können, wenn ein spezielles Gemisch betrachtet wird, mithin die das Trägerfluid bildenden einzelnen Fluide bekannt sind. Mit besonderem Vorteil kann im Rahmen der vorliegenden Erfindung mithin vorgesehen sein, dass bei der Ermittlung des k-Faktors zusätzlich eine Fluidinformation, die wenigstens eines der Fluide, insbesondere das Glykol bei Wasser als weiterem Fluid, des Gemisches identifiziert, berücksichtigt wird, insbesondere eine für das Fluid bzw. die Fluidkombination spezifische Ermittlungsvorschrift verwendet wird. Insbesondere beschreibt die Fluidinformation mithin die Zusammensetzung des Gemischs, also deren Grundkomponenten. Auch wenn mithin ein unzweideutiger Zusammenhang zwischen der Schallgeschwindigkeit und dem k-Faktor für alle denkbaren Fluide oder sogar für alle denkbaren Glykole in einem Wasser-Glykol-Gemisch nicht existieren mag, hat sich jedoch gezeigt, dass für jede Gruppe von Datenpunkten, die derselben Gemischzusammensetzung, mithin denselben Grundkomponenten, insbesondere Wasser und Glykol, zugeordnet sind, ein unzweideutiger Zusammenhang, mithin eine unzweideutige Ermittlungsvorschrift, zwischen der Schallgeschwindigkeit und dem k-Faktor herleiten lässt, so dass eine äußerst genaue Bestimmung des k-Faktors möglich ist. Dabei hat sich gezeigt, dass sich eine Zunahme des Glykolanteils in einem Wasser-Glykol-Gemisch in einer Erhöhung der Schallgeschwindigkeit und einem Absinken des k-Faktors äußert.

Erfindungsgemäß wird die Ermittlungsvorschrift aus empirischen Ergebnissen, insbesondere Datenpunkten, für wenigstens zwei unterschiedliche Zusammensetzungen also unterschiedliche Grundkomponenten, des Gemischs, insbesondere mehrere unterschiedliche Glykole im Glykol-Wasser-Gemisch, ermittelt.

Eine Energiezählereinrichtung mit einer Art universeller, also gemischunabhängiger, k-Faktor-Ermittlung kann umgesetzt werden, wenn ein gemeinsamer, temperaturabhängiger Zusammenhang zwischen der Schallgeschwindigkeit und dem k-Faktor angenommen wird. Dieser Zusammenhang und mithin die Ermittlungsvorschrift kann aufgefunden werden, indem beispielsweise ein Fit nach der Methode der kleinsten Quadrate für alle relevanten Datenpunkte durchgeführt wird. Letztlich wird also ein "mittlerer" Verlauf angenommen. Dabei sei jedoch darauf hingewiesen, dass eine hierbei herangezogene Gruppe unterschiedlicher Zusammensetzungen des Gemischs nicht alle denkbaren Zusammensetzungen des Gemisches zwangsläufig umfassen muss, sondern beispielsweise Wasser-Glykol-Gemische, die ein äußerst ähnliches Verhalten zeigen, zusammengefasst werden können, so dass Energiezählereinrichtungen für diese Gruppen von unterschiedlichen Zusammensetzungen des Gemischs herangezogen werden können. Ein bestimmender Faktor bei der Zusammenstellung derartiger Gruppen kann sein, dass eine gewisse Genauigkeit in der Bestimmung des k-Faktors gefordert wird. Auf diese Weise können mithin Gruppen gewählt werden, deren Datenpunkte bzw. Verläufe in einem hinreichend engen Bereich beieinander liegen, um dennoch eine hinreichend genaue Bestimmung des k-Faktors für die angeforderten Zwecke, beispielsweise hinsichtlich einer Zertifizierung der Energiezählereinrichtung, zu erlauben. Beispielsweise kann wenigstens eine Gruppe unterschiedlicher Zusammensetzungen des Gemischs aufgrund einer Vorgabe einer Genauigkeit zur Bestimmung des k-Faktors zusammengestellt werden, beispielsweise für eine Genauigkeit von 1 %. Für eine die Gruppe der wenigstens zwei unterschiedlichen Zusammensetzungen beschreibende Gruppeninformation kann wie oben bezüglich der Fluidinformation vorgegangen werden; zudem kann anhand einer Fluidinformation die Zugehörigkeit zu einer Gruppe überprüft werden.

Zur Ermittlung der Ermittlungsvorschrift können Datenpunkte, die aus Messungen und/oder Simulationen gewonnen wurden, herangezogen werden, wobei Messergebnisse bevorzugt eingesetzt werden. Konkret kann vorgesehen sein, dass als Ermittlungsvorschrift eine Look-Up-Tabelle und/oder ein mathematischer Zusammenhang ermittelt wird. Die Ermittlungsvorschrift kann durch einen Fit an Mess- und/oder Simulationspunkte (zusammenfassend Datenpunkte), insbesondere mittels der Methode der kleinsten Quadrate, ermittelt werden. Dabei bietet sich eine Look-Up-Tabelle besonders an, da diese elektronisch in der Energiezählereinrichtung einfach umgesetzt werden kann.

In einer vorteilhaften Weiterbildung des erfindungsgemäßen Verfahrens kann vorgesehen sein, dass während eines Ablesevorgangs und/oder Energieverbrauchsübermittlungsvorgangs über eine Kommunikationsverbindung neben dem Energieverbrauch auch wenigstens ein aktuell bestimmter k-Faktor übermittelt wird. Auf diese Weise erhält der Versorger, der die Energie bereitstellt, eine Information über den Zustand der Energiezählereinrichtung, insbesondere eine eingetretene Veränderung der thermischen Eigenschaften des Gemischs, also Trägerfluids. Konkret kann vorgesehen sein, dass eine Veränderung des k-Faktors über die Zeit seitens eines die Energie bereitstellenden Versorgers, insbesondere automatisch, ausgewertet wird. Beispielsweise kann überwacht werden, ob eine einen Schwellwert überschreitende Veränderung gegenüber einem ursprünglichen und/oder dem zuletzt übermittelten Wert des k-Faktors vorliegt und dergleichen.

Neben dem Verfahren betrifft die Erfindung auch eine Energiezählereinrichtung zur Ermittlung des Energieverbrauchs in einem Temperierungskreislauf, in dem ein Gemisch aus wenigstens zwei Fluiden, insbesondere ein Wasser-Glykol-Gemisch, zirkuliert, wobei die Energiezählereinrichtung eine Ultraschallmesseinrichtung zur Ermittlung des Gemischdurchflusses durch eine Laufzeitmessung, eine Temperaturmesseinrichtung zur Ermittlung einer Temperaturdifferenz zwischen dem Vorlauf und dem Rücklauf des Gemischs und eine Recheneinrichtung zur Ermittlung des Energieverbrauchs unter Berücksichtigung des Durchflusses, der Temperaturdifferenz sowie eines k-Faktors des Gemischs aufweist, die sich dadurch auszeichnet, dass sie zur Durchführung eines erfindungsgemäßen Verfahrens ausgebildet ist. Sämtliche Ausführungen bezüglich des erfindungsgemäßen Verfahrens lassen sich analog auf die erfindungsgemäße Energiezählereinrichtung übertragen, mit der mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1 einen den Zusammenhang zwischen der Schallgeschwindigkeit und dem k-Faktor zeigenden Graphen für unterschiedliche Wasser-Glykol-Gemische und Temperaturen,

Fig. 2 einen Ablaufplan eines Ausführungsbeispiels des erfindungsgemäßen Verfahrens, und

Fig. 3 eine erfindungsgemäße Energiezählereinrichtung.

Im Folgenden werden Ausführungsbeispiele der vorliegenden Erfindung für Zwei-Komponenten-Gemische, konkret ein Trägerfluid, das aus Wasser und einem bestimmten Glykol besteht, diskutiert. Dies schränkt die Anwendbarkeit der vorliegenden Erfindung auf andere Flüssigkeiten, insbesondere Frostschutzmittel, bzw. allgemein Fluide und deren Kombinationen grundsätzlich jedoch nicht ein.

Im Rahmen der vorliegenden Erfindung wurden verschiedenste Messergebnisse in Form von Datenpunkten zusammengeführt, um zu überprüfen, ob ein (hinreichend) eindeutiger Zusammenhang zwischen der Schallgeschwindigkeit in einem Gemisch, im Folgenden $c_f$, und dem k-Faktor k besteht, der zur unmittelbaren Ermittlung eines aktuellen k-Faktors bei der Messung des Verbrauchs thermischer Energie aus der Schallgeschwindigkeit und der aktuellen Temperatur des Gemischs herangezogen werden kann. Beispiele für derartige grundlegende Messergebnisse lassen sich beispielsweise der bereits genannten Präsentation von Sebastian Baack entnehmen.

Fig. 1 zeigt beispielhaft die Abhängigkeit zwischen der Schallgeschwindigkeit $c_f$ und dem k-Faktor k für verschiedene, feste Temperaturen von 20 °C, 30 °C und 40 °C. Die links oben sichtbaren Datenpunkte 1 beziehen sich dabei auf reines Wasser, während sich die Datenpunktgruppe 2 auf ein erstes Wasser-Glykol-Gemisch mit Antifrogen N als Glykol bezieht, die zweite Datenpunktgruppe 3 auf ein zweites Wasser-Glykol-Gemisch mit Tyfocor L als Glykol. Die gezeigten Datenpunkte sind Messpunkte, die für unterschiedliche Mischungsverhältnisse aufgenommen wurden, welche Mischungsverhältnisse aber in einer aus derartigen Datenpunkten 1, 2, 3 ableitbaren empirischen Ermittlungsvorschrift keine Rolle mehr spielen.

Aus Fig. 1 ist ersichtlich, dass für jede Gruppe 2, 3 von Datenpunkten, die derselben Art von Glykol zugeordnet ist, eine unzweideutige Ermittlungsvorschrift zwischen der Schallgeschwindigkeit und dem k-Faktor für die verschiedenen Temperaturen hergeleitet werden kann. Ein Anstieg des Glykolanteils in der Mischung führt zu einer Erhöhung der Schallgeschwindigkeit und einem Abnehmen des k-Faktors, so dass mithin in Fig. 1 für die Datenpunkte von links nach rechts die Glykolkonzentration zunimmt. Sind also die Grundkomponenten des Gemisches, hier die Art des Glykols, das zusammen mit Wasser verwendet wird, bekannt, kann mittels einer insbesondere durch einen Fit hergeleiteten Ermittlungsvorschrift, die als Look-Up-Tabelle und/oder mathematischer Zusammenhang vorliegen kann, aus der Temperatur und der Schallgeschwindigkeit auf den k-Faktor geschlossen werden. Der k-Faktor lässt sich unmittelbar herleiten, das bedeutet, eine Kenntnis des Mischungsverhältnisses, der Dichte und der spezifischen Wärmekapazität ist nicht erforderlich.

Für die verschiedenen Temperaturen liegt, wie Fig. 1 zeigt, ein ähnlicher genereller Verlauf vor. Abhängig von dem verwendeten Glykol und dem Mischungsverhältnis wird die Veränderung der Schallgeschwindigkeit in dem Gemisch zu einer Verschiebung aller Datenpunkte führen, wobei der generelle Trend weiterhin sichtbar ist.

Ermittlungsvorschriften können dabei für ein bestimmtes Wasser-Glykol-Gemisch, mithin insbesondere eine besondere Art von Glykol, ermittelt werden, um den k-Faktor hochgenau zu bestimmen. Jedoch ist es auch denkbar, Gruppen verschiedener Zusammensetzungen des Gemischs, hier also verschiedener Wasser-Glykol-Gemische, zu bilden, deren Datenpunkte eng genug zusammenliegen, so dass der Fehler bei der Bestimmung des k-Faktors innerhalb bestimmter Grenzen, beispielsweise kleiner als 1 %, verbleibt. In diesem Fall können für derartige Gruppen mithin gemeinsame Ermittlungsvorschriften bestimmt werden.

Eine Fluidinformation, die das verwendete Glykol anzeigt, kann bei Herstellung bzw. Einbau einer Wasserzählereinrichtung in diese unveränderbar eingespeichert werden, mithin hardcodiert werden, wobei es insbesondere auch möglich ist, die entsprechende, zugeordnete Ermittlungsvorschrift gemäß der Fluidinformation bzw. gemäß einer Gruppe von Wasser-Glykol-Gemischen, die der Ermittlungsvorschrift zugrunde liegt, in einem Speichermittel hardzucodieren. Möglich ist es in anderen Ausführungsbeispielen auch, die Ermittlungsvorschrift bzw. Ermittlungsvorschriften für unterschiedliche Zusammensetzungen des Gemischs und/oder unterschiedliche Gruppen von Gemischzusammensetzungen in einem Speichermittel der Energiezählereinrichtung vorzusehen, wobei eine Fluidinformation (bzw. Gruppeninformation) über ein Eingabemittel der Energiezählereinrichtung und/oder eine Kommunikationsschnittstelle empfangen werden kann, dabei aber bevorzugt Sicherheitsmaßnahmen gegen eine unzulässige Änderung, beispielsweise durch den Endbenutzer, dessen Verbrauch thermischer Energie gezählt werden soll, vorzusehen.

Fig. 2 zeigt einen Ablaufplan eines Ausführungsbeispiels eines erfindungsgemäßen Verfahrens zum Betrieb einer Energiezählereinrichtung, konkret zur Ermittlung des Verbrauchs unter Berücksichtigung eines sich möglicherweise ändernden Trägerfluids (Gemischs). Die Energiezählereinrichtung misst den Gemischdurchfluss am Rücklauf dabei durch Ultraschall, weshalb ihre Messvorrichtung eine Ultraschallmesseinrichtung zur Ermittlung des Gemischdurchflusses durch eine Laufzeitmessung aufweist. Ferner ist eine Temperaturmesseinrichtung vorgesehen, die die absolute Temperatur des Gemischs beim Vorlauf und beim Rücklauf des Temperierungskreislaufs und somit eine Temperaturdifferenz zwischen dem Vorlauf und dem Rücklauf ermitteln kann. Eine Recheneinrichtung ist zur Ermittlung des Energieverbrauchs unter Berücksichtigung des Durchflusses, der Temperaturdifferenz sowie des k-Faktors des Gemischs auf Grundlage der Gleichung (1) ausgebildet.

In dem erfindungsgemäßen Verfahren werden in einem Schritt S1 nun nicht nur die Temperaturen 4 (und somit die Temperaturdifferenz) sowie der Durchfluss 5 ermittelt, sondern auch eine aktuelle Schallgeschwindigkeit 6. Die Messung der Schallgeschwindigkeit 6 kann erfolgen, wenn gerade keine Bewegung des Gemischs vorliegt, oder aber durch Bildung des Mittelwertes zwischen einer Laufzeit einer Stromaufwärts-Messung und einer Stromabwärts-Messung bzw. aus einer Summe der reziproken Laufzeiten, wie bezüglich der Formeln (2) und (3) oben erläutert. Entsprechende Microcontroller für Ultraschallmesseinrichtungen sind bereits bekannt.

In einem Schritt S2 werden die Schallgeschwindigkeit 6 und die Temperatur am Rücklauf, wo vorliegend auch die Schallgeschwindigkeit bzw. der Durchfluss gemessen wird, optional gemeinsam mit der Fluidinformation 7 (bzw. Gruppeninformation) als Eingangsgrößen für die empirisch ermittelte Ermittlungsvorschrift 8 verwendet, um unmittelbar den k-Faktor 9 zu bestimmen. Die Ermittlungsvorschrift 8 kann, beispielsweise als mathematischer Zusammenhang, durch einen Fit, beispielsweise nach der Methode der kleinsten Quadrate, entsprechender Datenpunkte 1, 2, 3 ermittelt worden sein. Bevorzugt liegt die Ermittlungsvorschrift 8 in der Energiezählereinrichtung als eine Look-Up-Tabelle vor.

In einem Schritt S3 werden der k-Faktor 9, die sich aus den Temperaturen 4 ergebende Temperaturdifferenz und der Durchfluss 5 dann, wie grundsätzlich bekannt, genutzt, um den Energieverbrauch 10 zu bestimmen.

Es ist in dem gezeigten Ausführungsbeispiel auch denkbar, während eines Ablesevorgangs und/oder Energieverbrauchsübermittlungsvorgangs über eine Kommunikationsverbindung neben dem Energieverbrauch auch wenigstens einen aktuell bestimmten k-Faktor 9 zu übermitteln. Wird also beispielsweise eine Kommunikationsverbindung zu einem Ablesegerät aufgebaut oder eine bestehende Kommunikationsverbindung genutzt, um Energieverbrauchsinformationen zu übermitteln, wird mit diesen als Indikator für den Zustand der Energiezählereinrichtung auch beispielsweise der aktuellste k-Faktor 9 übermittelt. Auf diese Weise erhält der Versorger, der die Energie bereitstellt, eine Information zu einer potentiell eingetretenen Veränderung der thermischen Eigenschaften des Gemischs, also Trägerfluids. Der k-Faktor 9 bzw. dessen zeitliche Veränderung kann seitens des Versorgers entsprechend ausgewertet werden.

Fig. 3 zeigt in Form einer Prinzipdarstellung eine erfindungsgemäße Energiezählereinrichtung 11 mit einer Messvorrichtung 12. Die Messvorrichtung 12 umfasst eine Ultraschallmesseinrichtung 13, die im gezeigten Beispiel zwei Ultraschalltransducer (Ultraschallmessköpfe) 14 zur Ermittlung des Durchflusses durch ein Strömungsrohr 15 der Messvorrichtung 12 nutzt. Ferner umfasst die Messvorrichtung 12 eine Temperaturmesseinrichtung 16 zur Erfassung einer Temperaturdifferenz zwischen dem Vorlauf und dem Rücklauf eines in einem hier nur angedeuteten Temperierungskreislauf 17 strömenden Gemischs 18, insbesondere eines Wasser-Glykol-Gemischs. Die Messvorrichtung 12 ist in diesen Temperierungskreislauf 17 eingebunden. Die Temperaturmesseinrichtung 16 umfasst zwei Temperatursensoren 19, von denen der eine exemplarisch im Vorlauf 20 und der andere im Rücklauf 21, hier im Strömungsrohr 15 selbst, angeordnet ist. Die Ultraschallmesseinrichtung 13 ist dabei hier im Rücklauf 21 angeordnet, kann aber in anderen Ausführungsbeispielen auch im Vorlauf 20 vorgesehen sein, wobei dann als Gemischtemperatur am Ort der Ultraschallmesseinrichtung 13 dann statt der Rücklauftemperatur die Vorlauftemperatur zu wählen ist. Im Temperierungskreislauf 17 ist wenigstens ein hier ebenso nur angedeuteter Wärme- oder Kälteenergieverbraucher V eingebunden. Ein entsprechender Wärme- oder Kälteenergieerzeuger E ist ebenso angedeutet.

Im vorliegenden Fall ist die Ultraschallmesseinrichtung 13 auch ausgebildet, die Schallgeschwindigkeit 6 zu bestimmen, beispielsweise durch Summierung bzw. Mittelung der Laufzeiten bzw. reziproken Laufzeiten des Ultraschallsignals stromaufwärts und stromabwärts zwischen den Ultraschalltransducern 14.

In einer Recheneinrichtung 22 der Messeinrichtung 12 werden die Messdaten der Ultraschallmesseinrichtung 13 sowie der Temperaturmesseinrichtung 16 verarbeitet. Dabei wird zum einen mittels der Ermittlungsvorschrift 8 gemäß dem Schritt S2 ein k-Faktor 9 bestimmt, zum anderen gemäß dem Schritt S3 der thermische Energieverbrauch 10 ermittelt.

Die Energiezählereinrichtung 11 kann im Übrigen auch, wie bereits erwähnt, ein nicht näher gezeigtes Eingabemittel und/oder eine Kommunikationsschnittstelle 23 aufweisen, um eine Fluidinformation 7 entgegenzunehmen, wenn nicht durch Auswahl einer bestimmten Ermittlungsvorschrift 8 oder als Fluidinformation 7 eine Hardcodierung in einem nicht näher gezeigten Speichermittel der Energiezählereinrichtung 11 vorgenommen wurde.

Bezugszeichenliste

| | |
|---|---|
| 1 | Datenpunkt |
| 2 | Datenpunktgruppe |
| 3 | Datenpunktgruppe |
| 4 | Temperatur |
| 5 | Durchfluss |
| 6 | Schallgeschwindigkeit |
| 7 | Fluidinformation |
| 8 | Ermittlungsvorschrift |
| 9 | k-Faktor |
| 10 | Energieverbrauch |
| 11 | Energiezählereinrichtung |
| 12 | Messvorrichtung |
| 13 | Ultraschallmesseinrichtung |
| 14 | Ultraschalltransducer |
| 15 | Strömungsrohr |
| 16 | Temperaturmesseinrichtung |
| 17 | Temperierungskreislauf |
| 18 | Gemisch |
| 19 | Temperatursensor |
| 20 | Vorlauf |
| 21 | Rücklauf |
| 22 | Recheneinrichtung |
| 23 | Kommunikationsschnittstelle |

S1 - S3 Schritt

**Patentansprüche**

1. Verfahren zum Betrieb einer Energiezählereinrichtung (11) zur Ermittlung des Energieverbrauchs (10) in einem Temperierungskreislauf (17), in dem ein Gemisch (18) aus wenigstens zwei Fluiden, insbesondere ein Wasser-Glykol-Gemisch, zirkuliert, wobei die Energiezählereinrichtung (11) eine Ultraschallmesseinrichtung (13) zur Ermittlung des Gemischdurchflusses (5) durch eine Laufzeitmessung, eine Temperaturmesseinrichtung (16) zur Ermittlung einer Temperaturdifferenz zwischen dem Vorlauf (20) und dem Rücklauf (21) des Gemischs (18) und eine Recheneinrichtung (22) zur Ermittlung des Energieverbrauchs (10) unter Berücksichtigung des Durchflusses (5), der Temperaturdifferenz sowie eines k-Faktors (9) des Gemischs (18) aufweist, wobei durch die Ultraschallmesseinrichtung (13) auch eine Schallgeschwindigkeit (6) des Gemischs (18) ermittelt wird, **dadurch gekennzeichnet, dass** durch die Recheneinrichtung (22) aus der Schallgeschwindigkeit (6) und der von der Temperaturmesseinrichtung gemessenen Gemischtemperatur (4) am Ort der Ultraschallmesseinrichtung (13) aufgrund einer empirisch ermittelten Ermittlungsvorschrift (8) unmittelbar der k-Faktor (9) ermittelt wird, die Ermittlungsvorschrift (8) aus empirischen Ergebnissen für wenigstens zwei unterschiedliche Zusammensetzungen, also unterschiedliche Grundkomponenten, des Gemischs (18), insbesondere mehrere unterschiedliche Glykole im Glykol-Wasser-Gemisch, ermittelt wird.

2. Verfahren nach Anspruch 1, **dadurch gekennzeichnet, dass** als Ermittlungsvorschrift (8) eine Look-Up-Tabelle und/oder ein mathematischer Zusammenhang ermittelt wird und/oder die Ermittlungsvorschrift (8) durch einen Fit an Mess- und/oder Simulationspunkte, insbesondere mittels der Methode der kleinsten Quadrate, ermittelt wird.

3. Verfahren nach einem der vorangehenden Ansprüche, **dadurch gekennzeichnet, dass** die Schallgeschwindigkeit (6) aus einem Mittelwert oder einer Summe eines Laufzeitwerts einer Stromabwärts-Messung und eines Laufzeitwerts einer Stromaufwärts-Messung oder einer Summe der reziproken Laufzeitwerte bei zwei in Flussrichtung gegenüberliegenden Ultraschalltransducern (14) und/oder bei einer Messung mit unbewegtem Gemisch (18) ermittelt wird.

4. Verfahren nach einem der vorangehenden Ansprüche, **dadurch gekennzeichnet, dass** während eines Ablesevorgangs und/oder Energieverbrauchsübermittlungsvorgangs über eine Kommunikationsverbindung neben dem Energieverbrauch (10) auch wenigstens ein aktuell bestimmter k-Faktor (9) übermittelt wird.

5. Verfahren nach Anspruch 4, **dadurch gekennzeichnet, dass** eine Veränderung des k-Faktors (9) über die Zeit seitens eines die Energie bereitstellenden Versorgers ausgewertet wird.

6. Energiezählereinrichtung (11) zur Ermittlung des Energieverbrauchs (10) in einem Temperierungskreislauf (17), in dem ein Gemisch (18) aus wenigstens zwei Fluiden, insbesondere ein Wasser-Glykol-Gemisch, zirkuliert, wobei die Energiezählereinrichtung (11) eine Ultraschallmesseinrichtung (13) zur Ermittlung des Gemischdurchflusses (5) durch eine Laufzeitmessung, eine Temperaturmesseinrichtung (16) zur Ermittlung einer Temperaturdifferenz zwischen dem Vorlauf (20) und dem Rücklauf (21) des Gemischs (18) und eine Recheneinrichtung (22) zur Ermittlung des Energieverbrauchs (10) unter Berücksichtigung des Durchflusses (5), der Temperaturdifferenz sowie eines k-Faktors (9) des Gemischs (18) aufweist, **dadurch gekennzeichnet, dass** die Energiezählereinrichtung (11) zur Durchführung eines Verfahrens nach einem der vorangehenden Ansprüche 1 bis 4 ausgebildet ist.

**Claims**

1. Method for operating an energy meter device (11) for ascertaining the energy consumption (10) in a temperature-control circuit (17), in which circulates a mixture (18) of at least two fluids, in particular a water/glycol mixture, wherein the energy meter device (11) comprises an ultrasonic measuring device (13) for ascertaining the mixture flow rate (5) by means of a transit-time measurement, a temperature measuring device (16) for ascertaining a temperature difference between the supply (20) and the return (21) of the mixture (18), and a processing device (22) for ascertaining the energy consumption (10), taking into account the flow rate (5), the temperature difference and a k-factor (9) of the mixture (18), wherein the ultrasonic measuring device (13) also ascertains a speed of sound (6) of the mixture (18), **characterized in that** the processing device (22) determines the k-factor (9) directly from the speed of sound (6) and the mixture temperature (4) measured by the temperature measuring device at the location of the ultrasonic measuring device (13), on the basis of an empirically obtained determination rule (8), the determination rule (8) is obtained from empirical results for at least two different compositions, that is to say different basic components, of the mixture (18), in particular a plurality of different glycols in the glycol/water mixture.

2. Method according to Claim **1, characterized in that** a lookup table and/or a mathematical association is obtained as the determination rule (8), and/or the determination rule (8) is obtained by a fit to measurement and/or simulation points, in particular using the least squares method.

3. Method according to any of the preceding claims, **characterized in that** the speed of sound (6) is ascertained from an average value or sum of a transit-time value from a downstream measurement and a transit-time value from an upstream measurement or a sum of the reciprocal transit-time values in the case of two ultrasonic transducers (14) facing each other in the flow direction, and/or is ascertained from one measurement in the case of a stationary mixture (18).

4. Method according to any of the preceding claims, **characterized in that** also at least one currently ascertained **k-factor** (9) is transferred in addition to the energy consumption (10) during a readout process and/or energy consumption transfer process via a communication link.

5. Method according to Claim **4, characterized in that** a variation in the k-factor (9) over time is evaluated by a supplier providing the energy.

6. Energy meter device (11) for ascertaining the energy consumption (10) in a temperature-control circuit (17), in which circulates a mixture (18) of at least two fluids, in particular a water/glycol mixture, wherein the energy meter device (11) comprises an ultrasonic measuring device (13) for ascertaining the mixture flow rate (5) by means of a transit-time measurement, a temperature measuring device (16) for ascertaining a temperature difference between the supply (20) and the return (21) of the mixture (18), and a processing device (22) for ascertaining the energy consumption (10), taking into account the flow rate (5), the temperature difference and a k-factor (9) of the mixture (18), **characterized in that** the energy meter device (11) is designed to perform a method according to any of the preceding Claims 1 to 4.

## Revendications

1. Procédé de fonctionnement d'un dispositif compteur d'énergie (11) destiné à déterminer la consommation d'énergie (10) dans un circuit de régulation de température (17), dans lequel circule un mélange (18) composé d'au moins deux fluides, en particulier un mélange d'eau et de glycol, le dispositif compteur d'énergie (11) comprenant un dispositif de mesure à ultrasons (13) destiné à déterminer le débit du mélange (5) par une mesure du temps de transit, un dispositif de mesure de température (16) destiné à déterminer une différence de température entre l'aller (20) et le retour (21) du mélange (18) et un dispositif de calcul (22) destiné à déterminer la consommation d'énergie (10) en prenant en considération le débit (5), la différence de température ainsi qu'un facteur k (9) du mélange (18), le dispositif de mesure à ultrasons (13) déterminant également une vitesse du son (6) du mélange (18), **caractérisé en ce que** le facteur k (9) est directement déterminé par le dispositif de calcul (22) à partir de la vitesse du son (6) et de la température du mélange (4) mesurée par le dispositif de mesure de température à l'emplacement du dispositif de mesure à ultrasons (13), sur la base d'une règle de détermination (8) établie empiriquement, la règle de détermination (8) étant établie à partir de résultats empiriques pour au moins deux compositions différentes, à savoir des constituants de base différents, du mélange (18), en particulier plusieurs glycols différents dans le mélange de glycol et d'eau.

2. Procédé selon la revendication 1, **caractérisé en ce qu'**en tant que règle de détermination (8), une table de correspondance et/ou une relation mathématique est déterminée et/ou la règle de détermination (8) est déterminée par un ajustement sur des points de mesure et/ou de simulation, en particulier au moyen de la méthode des moindres carrés.

3. Procédé selon l'une des revendications précédentes, **caractérisé en ce que** la vitesse du son (6) est déterminée à partir d'une valeur moyenne ou d'une somme d'une valeur de temps de transit d'une mesure aval et d'une valeur de temps de transit d'une mesure amont ou d'une somme des valeurs de temps de transit réciproques au niveau de deux transducteurs à ultrasons (14) opposés dans le sens du flux et/ou lors d'une mesure avec un mélange (18) immobile.

4. Procédé selon l'une des revendications précédentes, **caractérisé en ce qu'**au moins un facteur k (9) actuellement déterminé est également transmis par l'intermédiaire d'une liaison de communication en plus de la consommation d'énergie (10) pendant un processus de lecture et/ou un processus transmission de la consommation d'énergie.

**5.** Procédé selon la revendication 4, **caractérisé en ce qu'**une variation du facteur k (9) au cours du temps est évaluée par un fournisseur d'énergie.

**6.** Dispositif compteur d'énergie (11) destiné à déterminer la consommation d'énergie (10) dans un circuit de régulation de température (17), dans lequel circule un mélange (18) composé d'au moins deux fluides, en particulier un mélange d'eau et de glycol, le dispositif compteur d'énergie (11) comprenant un dispositif de mesure à ultrasons (13) destiné à déterminer le débit (5) du mélange par une mesure du temps de transit, un dispositif de mesure de température (16) destiné à déterminer une différence de température entre l'aller (20) et le retour (21) du mélange (18) et un dispositif de calcul (22) destiné à déterminer la consommation d'énergie (10) en prenant en considération le débit (5), la différence de température ainsi qu'un facteur k (9) du mélange (18), **caractérisé en ce que** le dispositif compteur d'énergie (11) est conçu pour mettre en œuvre un procédé selon l'une des revendications 1 à 4 précédentes.

FIG. 1

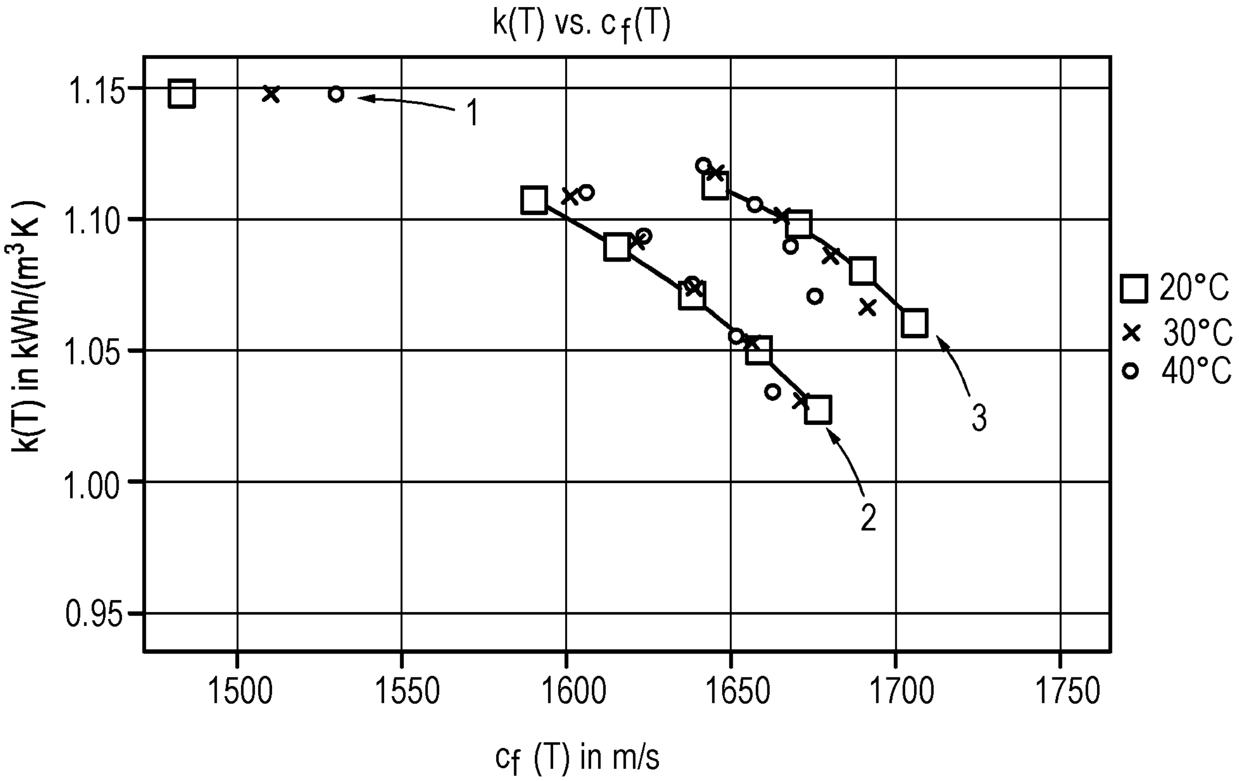
k(T) vs. $c_f$(T)
k(T) in kWh/(m³K)
1.15
1.10
1.05
1.00
0.95
1500
1550
1600
1650
1700
1750
$c_f$ (T) in m/s
1
2
3
20°C
30°C
40°C

FIG. 2

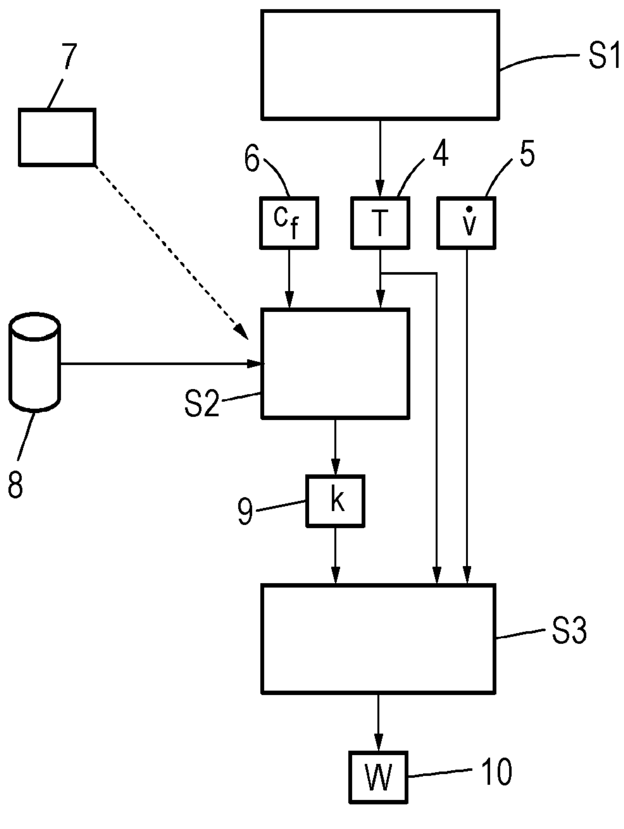
S1
7
6
4
5
$c_f$
T
$\dot{V}$
8
S2
9
k
S3
W
10

FIG. 3

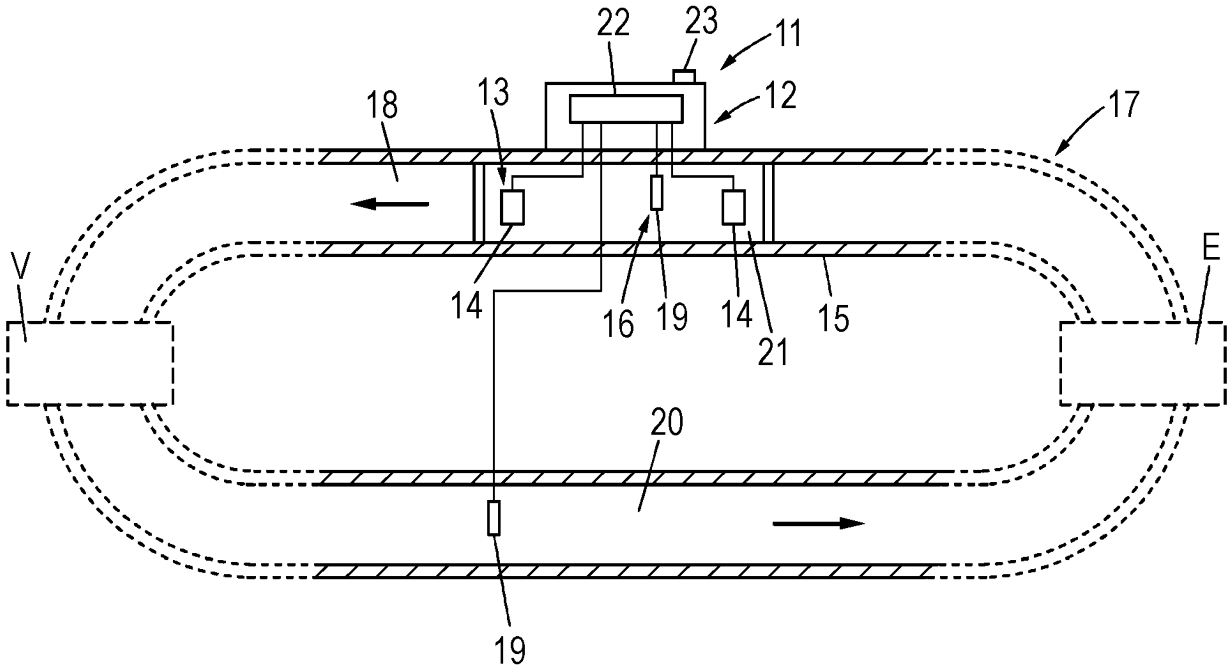

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102007015609 A1
- EP 1975582 B1
- EP 2746742 A1
- WO 2012065276 A1
- FR 6047